# EUROPEAN PATENT APPLICATION

(11) **EP 3 936 557 A1**
(43) Date of publication of application: **12.01.2022**
(21) Application number: 20184460.2
(22) Date of filing: 07.07.2020
(51) Int. Cl.: C08J 5/22, B01D 69/12, C08J 7/18

(54) **COMPOSITE ION-EXCHANGE MEMBRANE AND PROCESS FOR PRODUCTION THEREOF**

(71) Applicant: HurraH SarL, 8281 Kehlen (LU)
(72) Inventor: Charyton, Martyna, 8281 Kehlen (LU); Deboli, Francesco, 8281 Kehlen (LU); Donten, Mateusz, 8281 Kehlen (LU)
(74) Representative: Brantsandpatents bvba

(57) **Abstract**

The current invention relates to a process for making a composite ion exchange membrane, said composite ion exchange membrane comprising at least one ion exchange polymer which adheres to a porous support, the process comprising the steps of : providing a porous support comprising a porous polymer matrix, said porous support having a thickness between 10 and 1000 µm and an median pore size between 10 and 100000 nm, preparing a curable ion exchange precursor comprising : (a) radicalizeable monomer or oligomer comprising a vinyl, acryl or acrylamide functional group, (b) monomer, oligomer or polymer with an ionexchange moiety and (c) optionally an initiator; creating a thin layer of curable ion exchange precursor onto at least one side of the porous support layer, and adhering said curable ion exchange precursor to said porous support by initiating radical polymerization of the curable ion exchange precursor. The invention further relates to the composite ion exchange membrane obtainable by said process.

## Description

### FIELD OF THE INVENTION

The present invention relates to an ion-exchange membrane and a producing method therefor.

### BACKGROUND

Ion-exchange membranes are known in the art. They generally comprise functional moieties which allow conductivity for certain ions, generally either cations or anions but further selectivity is possible, while resisting other species (and often electric currents). An issue with ion-exchange membranes comprising highly functionalized polymers is that only a limited group of ionomers allows to reach mechanically stable films. Further, those are typically complex multiblock copolymers known to be expensive and difficult to process.

A solution therefor is the use of composite matrices. Composite matrices comprise a support, typically a porous support, non-woven or membrane which is in some way functionalized. Processes for the production of composite matrices often use solvents, which are both expensive and not ecological.

US 9 266 069 discloses an ion-exchange membrane comprising an ion-exchange layer made of a cationic polymer and/or an anionic polymer and a supporting layer, wherein the ion-exchange layer is formed on the supporting layer by printing. An issue with such a method is that it only applies to polymers which can be printed easily. Furthermore, the process is slow and requires expensive printing equipment.

US 5 795 668 discloses fuel cell and a battery with a reinforced polymeric ion exchange membrane are disclosed. The membrane comprises (a) a porous support layer, preferably of fluorine-containing polymer, and (b) an ion exchange resin, preferably a fluorinated ionomer (s) supported on one or both sides of the porous support layer. These are connected by heat-consolidation of both polymers. Disadvantages of this process is that heat consolidation causes permanent damage to both polymers. Additionally, it may cause microscopic tears in the ion exchange layer. These tears may act as gateways for any species to pass through the ion exchange layer, which has detrimental results for the selectivity of the composite ion exchange membrane.

### SUMMARY OF THE INVENTION

The present invention and embodiments thereof serve to provide a solution to one or more of above-mentioned disadvantages. To this end, the present invention relates to a process according to claim 1.

This process is quick, can be scaled up and does not require solvents. This is both ecologically and economically beneficial. Additionally, it can be applied to a very wide range of functional polymers, with little requirements on their processability, mechanical or chemical properties. Consequently, a very wide range of products may be obtained with a single process.

Preferred embodiments of the device are shown in any of the claims 2 to 10.
A specific preferred embodiment relates to an invention according to claim 2. A particular advantage of this preferred embodiment is the reduced impregnation of the curable ion exchange precursor into the porous support during the coating, prior to curing. This leads to a limited impregnation of the ionomer into the pores of the porous support.

In a second aspect, the present invention relates to a composite ion exchange membrane according to claim 11. These composite ion exchange membranes show improved ion exchange properties such as improved ion conductivity or improved electric resistance. Alternatively, these composite ion exchange membranes have similar properties while using considerably less ionomer. Ion exchange polymers or ionomers can be difficult to process, lacking in mechanical properties and is generally expensive.

The mechanical and ionic properties of these composite membranes are partially decoupled between a thin layer of ion exchange layer and porous support. The ion exchange layer introduces ion exchange properties to the porous support, such as: ion conductivity, ion selectivity and ability to block convective flow. The ionomers used for ion exchange layers generally also show swelling and hydrophilic properties, resulting in a lacking mechanical stability. On the other hand, the porous support provides mechanical stability to the ionomer.

Preferred embodiments of the composite ion exchange membrane are shown in any of the claims 12 to 15.

### DETAILED DESCRIPTION OF THE INVENTION

The present invention concerns a process for making a composite ion exchange membrane, said composite ion exchange membrane comprising at least one ion exchange polymer adhering to a porous support.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The term ionomer is used as a synonym for polymers with functional moieties suitable for ion exchange. An ionomer or ion exchange polymer is a polymer comprising ionized or ionizeable moieties. These moieties may be pendant group moieties or part of the polymer backbone.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention relates to a process for making a composite ion exchange membrane, said composite ion exchange membrane comprising at least one ion exchange polymer adheres to a porous support, the process comprising the steps of:
- providing a porous support comprising a porous polymer matrix, said porous support having a thickness between 10 and 1000 µm and an median pore size between 10 and 100000 nm,
- preparing a curable ion exchange precursor comprising:
   (a) radicalizeable monomer or oligomer comprising a vinyl, acryl or acrylamide functional group
   (b) monomer, oligomer or polymer with an ion-exchange moiety
   (c) optionally an initiator
- creating a thin layer of curable ion exchange precursor onto at least one side of the porous support layer, and
- adhering said curable ion exchange precursor to said porous support by initiating radical polymerization of the curable ion exchange precursor.

The porous substrate is a porous polymer material. It guarantees the mechanical stability of the composite ion exchange membrane. This is particularly important advantageous when used in combination with ionomers which show significant swelling when contacted with the electrolyte. A wide range of porous polymer materials and methods for making said polymers are known.

The "average median size" as described herein refers to the median pore size diameter d50. That is to say, 50% of the pores have a diameter smaller than the median pore size diameter d50.

In a preferred embodiment, the porous substrate has a high-volume porosity. Preferably the volume porosity is at least 30%, more preferably the volume porosity is at least 40%, more preferably the volume porosity is at least 50%, more preferably the volume porosity is at least 60%, more preferably the volume porosity is at least 70%. The median pore size diameter d50 needs to be contained between 10 and 100000 nm. In a preferred embodiment, the median pore size diameter d50 is below 30 000 nm, more preferably the median pore size diameter d50 is below 10 000 nm, more preferably the median pore size diameter d50 is below 3 000 nm, more preferably the median pore size diameter d50 is below 1 000 nm, more preferably the median pore size diameter d50 is below 900 nm, more preferably the median pore size diameter d50 is below 800 nm, more preferably the median pore size diameter d50 is below 700 nm, more preferably the median pore size diameter d50 is below 600 nm, more preferably the median pore size diameter d50 is below 500 nm. A high volume porosity is beneficial for obtaining a high ionic conductivity of the composite ion exchange membrane.

The porous support preferably has a thickness between 10 and 1000 µm. In a preferred embodiment, the thickness of the porous support is below 900 µm, more preferably the thickness of the porous support is below 800 µm, more preferably the thickness of the porous support is below 700 µm, more preferably the thickness of the porous support is below 600 µm, more preferably the thickness of the porous support is below 500 µm. In a preferred embodiment, the thickness of the porous support is at least 25 µm, more preferably the thickness of the porous support is at least 50 µm, more preferably the thickness of the porous support is at least 75 µm, more preferably the thickness of the porous support is at least 100 µm, more preferably the thickness of the porous support is at least 125 µm, more preferably the thickness of the porous support is at least 150 µm, more preferably the thickness of the porous support is at least 175 µm, most preferably the thickness of the porous support is at least 200 µm. A ratio (A/B) of a thickness of the ion exchange layer (A) to a thickness of the porous support layer (B) is preferably 0.2 or less. A sufficiently thick porous support is beneficial to increase the electric resistance. This is in particularly important when ion exchange membranes are used in electrochemical cells, such as galvanic cells or electrolytic cells, in particular battery technology. A sufficiently thick porous support with respect to the ion exchange layer is required to ensure sufficient mechanical stability. This is particularly advantageous in view of swelling upon contact with an electrolyte. However, there is clear economic pressure to develop thin ion exchange membranes to reduce space. Thin ion exchange membranes allow reductions in space, which can be used for example to produce smaller batteries or batteries with a higher energy capacity per volume.

In a preferred embodiment of the invention, the curable ion exchange precursor has a viscosity of at least 3000 mPas. More preferably the curable ion exchange precursor has a viscosity of at least 3500 mPas, even more preferably the curable ion exchange precursor has a viscosity of at least 4000 mPas, even more preferably the curable ion exchange precursor has a viscosity of at least 4500 mPas, even more preferably the curable ion exchange precursor has a viscosity of at least 5000 mPas, even more preferably the curable ion exchange precursor has a viscosity of at least 6000 mPas, even more preferably the curable ion exchange precursor has a viscosity of at least 7000 mPas. The viscosity of the curable ion exchange precursor should be sufficiently high as to limit the penetration of the ion exchange precursor into the pores of the porous support prior to curing, and consequently limit the impregnation of the cured ion exchange layer in the porous support. This is beneficial for obtaining composite ion exchange membranes with higher conductivity.

In a further preferred embodiment, the viscosity can be increased by adding rheology modifiers and / or thickening agents. In a further preferred embodiment, thickening agents are chosen from the list of poly(acrylic acid) (PAA), polyvinylpyrrolidone (PVP) and poly(N-vinylimidazole) (PVI). In another further preferred embodiment, the monomers used in the curable ion exchange precursor can be prepolymerized to oligomers or polymers to increase their viscosity. In another further preferred embodiment, thickening agents such as precipitated or fumed silica can also be added. Preferably said thickening agents constitute a small part of the formulation, preferably less than 10% by weight.

In another preferred embodiment, the curable ion exchange precursor comprises molecules which have a vinyl, acryl or acrylamide functional group (a) and an ion-exchange moiety (b). Curable ion exchange precursors which molecules which have one radicalizeable functional group, such as vinyl, acryl or acrylamide functional groups, and one ion exchange moiety are suitable to polymerize to adhere onto the porous support via the vinyl, acryl and acrylamide groups. The ion exchange moieties provide the ion exchange layer with its ion exchange properties. The copolymerized ion exchange polymer forms a well crosslinked structure adhered to the porous support. As no solvent is required, this process is ecological and economical.

In another preferred embodiment, the curable ion exchange precursor comprises polymers with an ion-exchange moiety (b) but no vinyl, acryl or acrylamide functional group. The curable ion exchange precursor then comprises separate monomers, oligomers or polymers with radicalizeable groups (a) such as vinyl, acryl or acrylamide functional groups. These are thoroughly mixed, coated onto the porous support and subsequently cured. It is not required that upon curing, the radicalizeable monomers, oligomers or polymers bond with the functional polymers (those comprising an ion exchange moiety). Due to the thorough mixing, the functional polymer is interlaced with the cured polymer. Covalent bonds between the two are not necessary. The ion exchange layer comprises an interpenetrating polymer network (IPN). This is particularly advantageous as it allows the use of otherwise difficult to process polymers or polymers with problematic properties. For example, functional polymers used as ion exchange polymers often show significant swelling or are likely to dissolve into the medium. Consequently said ion exchange polymers cannot be used directly as an ion exchange membrane.. These issues can be at least partially overcome by locking said functional polymers in a cured IPN. In other words, the functional polymer (b) is interlaced with by curing radicalizeable polymers (a), without being covalently bonded thereto. The present process thus provides for a way to obtain a composite ion exchange membrane for polymers where generally several more reaction steps, related to grafting and copolymerization are required. Furthermore, no solvents are required. Additionally, the mechanical and ion exchange properties can be adjusted. For example, IPN networks have different microscopic structure, different glass transition temperatures (or rather regions), can show rubber-like properties without curing the functional ion exchange polymer, and so forth. This advantageously allows the production of composite ion exchange membranes with a very wide range of materials.

An interpenetrating polymer network (IPN) as described herein is a polymer comprising two or more networks which are at least partially interlaced on a polymer scale, but are not covalently bonded to each other. The network cannot be separated unless chemical bonds are broken. The two or more networks can be envisioned to be entangled in such a way that they are concatenated and cannot be pulled apart.

Particularly advantageous ionomers to use in the IPN embodiment of the present invention are polymers which have a high concentration of functional moieties, such as S-PEEK, polystyrene sulfonate, PVI and PEI. These ionomers are generally known to show significant swelling or dissolution in aqueous media and consequently may have lacking mechanical properties. As a result these polymers are typically not suitable to form a coating without secondary components. The incorporation into an IPN improves their mechanical properties, allows the use of different bonding chemistry and allows fine-tuning of the concentration of the functional moieties.

In another, more preferred embodiment, the radicalizeable monomer or oligomer (a) and the monomer, oligomer or polymer with an ion-exchange moiety (b) are miscible. This is advantageous as it allows coating the curable ion exchange precursor in absence of any solvents.

Curing of the reactive ion-exchange precursor can be initiated in various ways known in the art, such as thermal initiation and UV-initiation. When thermal initiation is used, low temperatures are preferred for process considerations. Photoinitiators are well known in the art, such as 2-hydroxy-2-methyl-1-phenylpropanone. In case of UV curable formulations commercial photoinitiators can be used, such as Irgacure 500, Omnirad 819, TPO and Omnirad 1173. In case of thermal curing common thermal initiator such as AIBN, benzoyl peroxide and potassium persulfate can be used. In a more preferred embodiment, the radical polymerization is UV-initiated. UV-initiation is beneficial as it allows better reaction control and better temperature control upon curing. This is particularly advantageous to scale-up the process. Temperature control is particularly important. Elevated temperature of curing may lead to impregnation of the ion exchange precursor into the pores of substrate, as high temperature decreases the viscosity of yet not cured ion exchange precursor.
Due to the lack of solvent, removal of heat can be more difficult. Furthermore, polymers such as the curable ion exchange precursor and the porous support are generally not known for their high heat conductivity. This can lead to hot-spots where heat builds up, such as in or near the pores and causes material damage or undesired reactions.

The curable ion exchange precursor can be applied to the porous support using general coating techniques. In a more preferred embodiment, the porous support can be coated by blade coating. The inventors have seen surprisingly good results with blade coating in combination with a sufficiently high viscosity of the ion exchange precursor. This is a simple process which does not require solvents, and can be applied to a wide range of ion exchange precursor compositions as well as porous supports. Furthermore, the same process (and process equipment) can thus be used for various different types of ion exchange membranes.

In an embodiment, the curable ion exchange precursor is coated onto at least one side of said porous support. In another embodiment, a curable ion exchange precursor is applied to both sides of said porous support. Coating on both sides is also possible using the presented method of fabrication. This may be beneficial for fabrication of bipolar membranes that possess both anion and cation exchange groups.

Bipolar membranes are composed by two layers of ionomer, one with anionic and one with cationic functionality. When the membranes are immersed in an electrolyte and an electrical current is passed through to the system, water splits inside the membrane - at the interface between the cationic and the anionic layer - and protons and hydroxyl ions are generated. An example of an application of such membranes is in production of an acid and a base from the corresponding salt. This membrane structure can be easily implemented in the method and ion exchange membrane according to the present invention by coating the two sides of the porous substrate with a ionomer layer of opposite charge.

Depending on the application, either can be advantageous. For use in electrochemical cells, generally coating both sides is preferred. This reduces the cross-over of any unwanted species, which generally improves efficiency and / or reduces the wear of the electrochemical cell. This is particularly advantageous for batteries which are cyclically charged and uncharged.

In another preferred embodiment, the ion-exchange moiety comprises negatively chargeable functional groups, in either ionic or protonated form, chosen from the list of sulfonic -SO3-, carboxylic -COO⁻, phosphonic-PO₃²⁻, -PO₃H⁻, preferably sulfonic -SO3-, carboxyl -COO⁻ or their protonated forms. These are suitable to produce cation exchange layers. Particular examples of suitable monomers, oligomers or polymers include but are not limited to : vinylsulfonic acid salts such as vinyl sulfonic acid, vinyl sulfonic acid sodium salt, sodium styrene sulfonate, lithium styrene sulfonate, sulfopropyl acrylate potassium salt, methyl propene sulfonic acid sodium salt, sodium vinylbenzenesulfonate or sulfonated polymers such as poly(sodium styrenesufonate), sulfonated poly(etheretherketone), sulfonated poly(ethersulfone).

In another preferred embodiment, the ion-exchange moiety comprises ionic or protonable amino groups, chosen from the list of: chosen from the list of: -NH₃⁺, - NH₂, -NR₁H₂⁺, -NRH, -NR₁R₂H⁺, -NR₁R₂ or -NR₁R₂R₃⁺-SR₂⁺, -SRH⁺, -SR, -SH, -PR₃⁺, -PR₂. Preferably, the ion-exchange moiety is chosen from the list of : -NH₃⁺, -NH₂, -NR₁H₂⁺, -NR₁H, -NR₁R₂H⁺, -NR₁R₂ or -NR₁R₂R₃⁺. These are suitable to produce anion exchange layers. Particular examples of suitable monomers, oligomers or polymers include, but are not limited to: aliphatic and aromatic amines such as vinylpyridine, vinylimidazole, vinylpyrrolidone or aminated polymers such as poly vinylpyrrolidone, polydiallyldimethylammonium chloride, polyethyleneimine.

Porous supports for use in methods according to the present invention preferably comprise a polymer matrix. The porous support may be substantially made of thermoplastic polymer. A first class of suitable thermoplastic polymer materials are halogenated polymers such as but not limited to polyvinyl chloride (PVC) and polyvinylidene chloride (PVDC), polyolefins such as polyethylene and polypropylene, or acrylic polymer materials, such as a (meth)acrylate homo or copolymer, e.g. poly(methyl methacrylate) (PMMA). A second class of suitable thermoplastic polymer materials are polymers obtained from polymerization of one or more ethylenically unsaturated monomer(s) selected from the group consisting of C1-C20-alkyl (meth)acrylates, vinyl and allyl esters of carboxylic acids of up to 20 carbon atoms, vinyl ethers of C1-C8 alcohols, vinyl aromatics of up to 20 carbon atoms, ethylenically unsaturated nitriles, vinyl halides, C1-C10-hydroxyalkyl(meth)acrylates, (meth)acrylamide, (meth)acrylamide substituted on the nitrogen by C1-C4-alkyl, ethylenically unsaturated carboxylic acids, ethylenically unsaturated dicarboxylic acids, half-esters of ethylenically unsaturated dicarboxylic acids, anhydrides of ethylenically unsaturated dicarboxylic acids, non-aromatic hydrocarbons having at least two conjugated double bonds, C1-C8 alkenes and mixtures of these monomers. Specific examples of polymers of the second class are polyvinylacetate (PVAc), polypropylene and polyacrylate. The matrix can be made of a blend of any combination of the above polymers of the first class and/or second class, or can be made of, or comprise a copolymer of a halogenated monomer, olefin monomer, or acrylic monomer (e.g. in an amount of 75% mole or more) and a monomer as indicated in the second class above (e.g., up to 25% mole). Polyvinyl chloride is a preferred polymer for the matrix, advantageously obtained from unplasticised, vinyl chloride polymer. In another embodiment, the porous support may be a porous polymer matrix in which filler particles are embedded. Such porous supports are referred to as filled porous supports. A filled porous support refers to a membrane comprising a polymeric matrix in which an advantageously inorganic material is dispersed. The polymeric matrix may be substantially made of the thermoplastic polymer materials described above.

In an more preferred embodiment, the porous support comprises a thermoplastic polymer material. More preferably, said thermoplastic polymer material is poly vinyl chloride. More preferably, the porous support is made of a powder blend comprising a thermoplastic polymer material and at least one inorganic filler embedded in the porous support. Said thermoplastic polymer material is preferably polyvinyl chloride having a viscosity of at least 60 measured according to ISO 1628-2. Preferably, the inorganic filler consists of sulfuric acid precipitated silica particles. The use of sulfuric acid precipitated silica provides a hydrophilic porous support and prevents addition of wetting agents which is source of leachables. Preferably, the porous support is devoid of oils and/or plasticizers thereby improving oxidation resistance of the membrane and minimizing or having no leachable amounts. This porous support can be used in aggressive environment, especially low pH such as concentrated sulfuric acid (for example H₂SO₄ at d=1.28), phosphoric acid (for example H₃PO₄ at d=1.25), mixture of hydrogen peroxide and sulfuric acid (so called Piranha solution). The porous support is compatible with solvents such as alcohols, aliphatic hydrocarbon, acids, oils and bleach. The porous support shows high mechanical resistance and high thermal stability compared to the membranes of the prior art.

In a second aspect, the invention relates to a composite ion exchange membrane obtainable by the process according to the first aspect. In a preferred embodiment, the composite ion exchange membrane is obtained by the process according to the first aspect.

In a more preferred embodiment, the composite ion exchange membrane comprises:
- a porous support having a thickness between 10 and 600 µm and an median pore size between 50 and 1000 nm,
- an ion exchange layer which adheres to said porous support layer, said ion exchange layer having a thickness between 10 and 100 µm and said ion exchange layer comprising ion-exchange moieties.

In another preferred embodiment, the depth of impregnation of the ion exchange coating into the porous substrate is less than 30% of the thickness of the coating, preferably less than 15% of the thickness of the coating, more preferably less than 5% of the thickness of the coating. The impregnation can be measured by destructive test, where the ion exchange coating is cut open and inspected under a microscope.

In another more preferred embodiment, the ion exchange layer consists of an interpenetrating polymer network (IPN), said interpenetrating polymer network comprising at least one functionalized polymer interlaced with a fixing polymer matrix, wherein said fixing polymer matrix is adhered to said porous support.

In another preferred embodiment, at least one of said functionalized monomers, oligomers or polymers are chosen from the list of : vinylsulfonic acid salts such as vinyl sulfonic acid, vinyl sulfonic acid sodium salt, sodium styrene sulfonate, lithium styrene sulfonate, sulfopropyl acrylate potassium salt, methyl propene sulfonic acid sodium salt, sodium vinylbenzenesulfonate or sulfonated polymers such as poly(sodium styrenesufonate), sulfonated poly(etheretherketone), sulfonated poly(ethersulfone), aliphatic and aromatic amines such as vinylpyridine, vinylimidazole, vinylpyrrolidone or aminated polymers such as poly vinylpyrrolidone, polydiallyldimethylammonium chloride, polyethyleneimine, and salts thereof. In a more preferred embodiment, at least one of said functionalized polymer is chosen from the list of : sulfonated poly(ether sulfone) or S-PES, sulfonated poly(ether ether ketone) or S-PEEK, sulfonated polystyrene, poly(dimethyldiallylammoniumchloride) or PolyDADMAC, polyvinylpyrrolidone or PVP, polyvinylimidazole or PVI, polyethyleneimine or PEI and salts thereof.

The ion exchange layer, that is to say the outer layer of the composite ion exchange membrane is preferably continuous, that is to say not porous. It is preferably that the ion exchange layer forms a barrier against most species and prevent them from crossing or permeating through the membrane. However, it does need to be suited for forming ion conducting channels there through. That is to say that the ion exchange layer is preferably not porous, but does allow the passage of (certain) cations or anions. A not porous or continuous ion exchange layer is preferable as this prevents fuel-crossover in fuel cells. It can also prevent degradation or mass-loss in batteries.

In a preferred embodiment, the adhesion between the porous support and the ion exchange layer can be improved using adhesion promotors. Adhesion promotors are known in the art.

The invention is further described by the following non-limiting examples which further illustrate the invention, and are not intended to, nor should they be interpreted to, limit the scope of the invention.

### EXAMPLES AND/OR DESCRIPTION OF FIGURES

It is supposed that the present invention is not restricted to any form of realization described previously and that some modifications can be added to the presented example of fabrication without reappraisal of the appended claims. It is clear that the method according to the invention, and its applications, are not limited to the presented examples.

### Example 1: vinyl functionalized PEI

Commercial branched poly(etyleneimine) has been vinyl functionalized by reacting it with glycidyl methacrylate. The modified PEI (PEI-ENE) was formulated with radically reactive crosslinkers and used for the fabrication of hierarchical anion exchange membranes.

PEI vinyl functionalization : branched PEI with a molecular weight (MW) of 2000 g/mol has been modified by grafting glycidyl methacrylate onto it. A vinyl modified-radically reactive poly(ethyleneimine) has been obtained.
3 g of said branched PEI has been diluted with 0.8g of isopropyl alcohol. 2g of glycidyl methacrylate have been added dropwise under mild stirring. The mixture has been left reacting for 1 hour until an increase in viscosity was noticed. It is expected that after this time glycidyl methacrylate has fully reacted with PEI through an amine-epoxy reaction, grafting vinyl groups on the polymer.

Membrane fabrication: 5.8 g of the functionalized PEI have been formulated with 0.3 g of tri(ethylene glycol) divinyl ether and 0.15 g of 2-hydroxy-2-methyl-1-phenylpropanone (photoinitiator). After mixing, the mixture has been has been applied on the porous substrate by means of blade coating using an automatic film applicator and cured in a UV conveyor. A 50 µm thick layer has been obtained after curing.

The fabricated ion exchange membrane showed an electrical resistance of 6.9 ± 0.2 Ω.cm² measured in 0.5M NaCl and a Cu²⁺ permeability of lower than 10E-6 cm/min estimated through a diffusion test. In electrodialysis desalination experiments the membrane allowed to reach a current efficiency of 84% when combined with sulfonated hierarchical anion exchange membranes in a 1 cell pair stack with 2 mm spacers.

### Example 2 : Vinyl amines with styrene or divinylbenzene

A composite anion exchange membrane has been fabricated by the formation of a thin layer of UV cured copolymer of vinyl pyridine and divinylbenzene adhered to the porous PVC-silica substrate of a thickness 500 µm.

In order to obtain an ion exchange precursor, the following compounds were mixed together: poly(styrene) (24 wt. %), divinylbenzene (32.5 wt. %), 2-vinylpyridine (40.7 wt. %), Ethyl (2,4,6-trimethylbenzoyl) phenyl phosphinate (2.4 %). Having a homogeneous viscous solution with completely dissolved poly(styrene), it was applied on the porous substrate by the blade coating with the use of an automatic applicator. The applied layer was cured in a UV conveyor. The thickness of the cured new top layer was defined by the use of optical microscope- 36 µm.

The equivalent functional number was theoretically calculated to be 3.8 mmol/g. The membrane exhibits an electric resistance of 3.7 ±0.2 Ω.cm² measured in 1 M HCl and a permeability to vanadium VO²⁺ (per sheet) of 3.5E-6 cm/min estimated through a diffusion test.

### Example 3: Acrylamides

A composite anion exchange membrane has been fabricated by the formation of a thin layer of Interpenetrating Polymer Network of poly(vinyl pyrrolidone) and UV curable monomers: N,N'-Methylenebis(acrylamide), N-[3-(Dimethylamino)propyl]methacrylamide and N-Hydroxyethyl acrylamide adhered to the porous PVC-silica substrate of a thickness 600 µm.

In order to obtain an ion exchange precursor, the following compounds were mixed together: poly(vinylpyrrolidone) (11.9 wt. %), N,N'-Methylenebis(acrylamide) (wt. 8.5%), N-[3-(Dimethylamino)propyl]methacrylamide (50.8 wt. %), N-Hydroxyethyl acrylamide (25.4 wt. %), Ethyl (2,4,6-trimethylbenzoyl) phenyl phosphinate (2.4 %). A homogeneous, viscous solution, it was applied on the porous substrate by the blade coating with the use of an automatic applicator. The applied layer was cured in a UV conveyor. The thickness of the cured new top layer was defined by the use of optical microscope- 28 µm.

The equivalent functional number was theoretically calculated to be 4.85 mmol/g. The membrane exhibits an electric resistance of 0.65 ±0.2 Ω.cm² measured in 1 M HCl and a permeability to vanadium VO²⁺ (per sheet) of 5.5E-5cm/min estimated through a diffusion test. The performance of the membrane was further tested in a vanadium redox flow battery laboratory test cell (Pinflowes). The membrane allowed to achieve at the current density of 50 mA/cm² the following cycling performance: energy efficiency of 73%, voltage Efficiency 85% and coulombic efficiency 85 %.

### Example 4 : Acrylamides or vinyl amines with acrylic resins

A composite anion exchange membrane has been fabricated by the formation of a thin layer of interpenetrating polymer network of poly(vinyl pyrrolidone) and UV curable monomers: N-[3-(Dimethylamino)propyl]methacrylamide, 2-Vinylpyridine and Bisphenol A ethoxylate diacrylate adhered to the porous PVC-silica substrate of a thickness 600 µm.

In order to obtain an ion exchange precursor, the following compounds were mixed together: poly(vinylpyrrolidone) (8.8 wt. %), N-[3-(Dimethylamino)propyl]methacrylamide (57.5 wt. %), 2-vinyl pyridine (13.3 wt. %), Bisphenol A ethoxylate diacrylate (17 wt. %), (Ethyl (2,4,6-trimethylbenzoyl) phenyl phosphinate (2.0 %). A homogeneous, viscous solution, it was applied on the porous substrate by the blade coating with the use of an automatic applicator. The applied layer was cured in a UV conveyor. The thickness of the cured new top layer was defined by the use of optical microscope - 54 µm.

The equivalent functional number was theoretically calculated to be 5.47 mmol/g. The membrane exhibits an electric resistance of 0.71 ±0.2 Ω.cm² measured in 1 M HCl and a permeability to vanadium VO²⁺ (per sheet) of 3.5E-5cm/min estimated through a diffusion test. The performance of the membrane was further tested in a vanadium redox flow battery laboratory test cell (Pinflowes). The membrane allowed to achieve at the current density of 50 mA/cm² the following cycling performance: energy efficiency of 76%, voltage efficiency 83% and coulombic efficiency 92%. The membrane was also tested at a current density of 80 mA/cm², achieving the following cycling performance: energy efficiency of 68%, voltage efficiency 73% and coulombic efficiency 95%.

### Example 5: styrene sulfonate salt with urethane acrylate resins

Hierarchical cation exchange membranes have been fabricated creating a thin layer of crosslinked urethane acrylate - styrene sulfonate copolymer on top of a porous PVC-silica porous substrate.

To fabricate the ion exchange coating a mixture of precursors was formulated according to the following weight ratios: Photomer 6901 - IGM Resins (30%), Photomer 6903 - IGM Resins (12%), lithium styrene sulfonate (22%), water (31%), 2-hydroxy-2-methyl-1-phenylpropanone (5%). Photomer 6901 is a a tin free water-dilutable di functional urethane acrylate oligomer. Photomer 6903 is a water-dilutable hexa functional urethane acrylate oligomer. The mixture was applied on the porous substrate by means of blade coating by using an automatic applicator and cured in a UV conveyor. A 40µm layer is obtained at the end of the process, on top of a 600 µm thick porous substrate.

The ion exchange capacity of the functional coating was calculated to be 1.8 mmolg/g and experimental measured to be 0.8 mmol/g. The fabricated ion exchange membrane showed an electrical resistance of 4.5 ± 0.6 Ω.cm² measured in 0.5M NaCl and a chlorine permeability of 1.1E-4 cm/min estimated through a diffusion test. In electrodialysis desalination experiments the membrane allowed to reach a current efficiency of 82% when combined with commercial anion exchange membranes in a 1 cell pair stack with 2 mm spacers.

### Example 6: Acrylate sulfonate salts with acrylic resins

A hierarchical cation exchange membrane has been fabricated by creating a thin layer of functional polymer starting from 3-sulfopropyl acrylate sodium salt and a commercial acrylic resin for UV curable coatings.

To formulate the ion exchange coating 3-sulfopropyl acrylate sodium salt (30%) has been mixed and dissolved in acrylic acid (22%). A modified bisphenol A epoxy diacrylate (46%) has been added to the mixture together with 1-Hydroxycyclohexyl-phenyl-ketone (1%) and benzophenone (1%). The formulation has been applied on the porous substrate by means of blade coating by using an automatic applicator and cured in a UV conveyor. A 60µm layer is obtained at the end of the process, on top of a 500 µm thick porous substrate.

The membrane exhibited an electrical resistance of 237 mΩ.cm² measured in 35% Na₂SO₄.

### Example 7 : PolyDADMAC with acrylic resins

A composite anion exchange membrane has been fabricated by the formation of a thin layer of interpenetrating polymeric network of poly dimethyl ammonium chloride interlaced with UV cured acrylated resin Ebecryl 3105 (Allnex) adhered to the porous PVC-silica substrate of a thickness 500 µm. Ebecryl 3105 (Allnex) is a low viscosity epoxy acrylate.

In order to obtain an ion exchange precursor, poly dimethyl ammonium chloride (15 wt. %) dissolved in water was mixed together with acrylated resin Ebecryl 3105 (Allnex) - (25.7 wt. %) and 2-hydroxy-2-methyl-1-phenyl-propan-1-one (4.4 wt. %). The mixture was applied on the porous substrate by the blade coating with the use of an automatic applicator. The applied layer was cured in a UV conveyor. The thickness of the cured new top layer was defined by the use of optical microscope-28 µm.

The equivalent functional number was theoretically calculated to be 2.49 mmol/g. The membrane exhibits an electric resistance of 0.71 ±0.2 Ω.cm² measured in 1 M HCl and a permeability to vanadium VO²⁺ (per sheet) of 6.5E-5 cm/min estimated through a diffusion test.

### Example 8: polystyrene sulfonate salts with urethane acrylate resins

Poly(styrene) sulfonate sodium salt was combined with urethane acrylate to fabricate functional IPN coatings on top of a porous substrate.
Poly(styrene sulfonate) was dissolved in water and mixed with urethane acrylate resins according to the following weight ratios: poly(styrene) sulfonate, distilled water (25%), Photomer 6901 - IGM Resins (28%), Photomer 6903 - IGM Resins (21%), hydroxyethylmethacrylate (7%), 2-hydroxy-2-methyl-l-phenylpropanone (2%). The mixture was applied on the porous substrate by means of blade coating by using an automatic applicator (BYK) and cured in a UV conveyor. A 45µm layer is obtained at the end of the process, on top of a 600 µm thick porous substrate.

The membrane showed an electrical resistivity of 16.5 Ω.cm² measured in 0.5M NaCl and a chlorine permeability of 7.3E-4 cm/min measured through a diffusion test. It is believed that the crosslinked acrylic acid/divinylbenzene matrix prevents the dissolution of poly(styrene) sulfonate and enables its use in ion exchange coatings.

### Example 9: S-PES with divinylbenzene and acrylic acid

Commercial grade sulfonated polyethersulfone (S-PES) has been used in combination with acrylic acid and divinylbenzene to fabricate a cation exchange coating on top of a PVC-silica porous substrate.

S-PES has been dissolved in n-methylpirrolidone (NMP) and formulated with radically reactive monomers according to the following weight ratios: S-PES (32%), N-methylpyrrolidon (NMP) (47%), acrylic acid (10%), divinylbenzene (10%), Irgacure TPO (1%). The mixture of precursors has been applied on the porous substrate by means of blade coating by using an automatic applicator and cured in a UV conveyor. The coated substrate has then been kept at 70°C in an oven to remove the remaining traces of NMP. A 30µm layer is obtained at the end of the process, on top of a 600 µm thick porous substrate. It is believed that in the ion exchange coating S-PES is immobilized in a crosslinked acrylic acid - divinylbenzene matrix.

The measured equivalent functionality of the ion exchange coating has been found to be 0.86 mmol/g. The fabricated ion exchange membrane has shown an electrical resistance of 5.8 ± 0.3 Ω.cm² measured in 0.5M NaCl and a chlorine permeability of 4.51E-5 cm/min estimated through a diffusion test. In electrodialysis desalination tests, the membranes have performed at a similar level of commercial materials both in terms of desalination rate and energy consumption.

### Example 10: S-PEEK with divinylbenzene and acrylic acid

S-PEEK has been used in combination with acrylic acid and divinylbenzene to fabricate IPN coatings.

The functional polymer has been dissolved in N,N-Dimethylformamide (DMF) and formulated with radically reacting monomers according to the following rations: S-PEEK (20%), Dimethylformamide (DMF)(59%), acrylic acid (10%), divinylbenzene (10%), Irgacure TPO (1%). The formulation has been applied on the porous substrate by means of blade coating using an automatic film applicator and cured in a UV conveyor. After curing of the ion exchange coating the membrane has been kept at 70°C overnight A 20 µm thick functional coating has been obtained on top of a 600 µm thick porous substrate.

The membrane showed an electrical resistivity of 7.60 ± 0.78 Ω.cm² measured in 0.5M NaCl and a chlorine permeability of 2.6E-5 measured through a diffusion test. On the basis of this results this membrane chemistry is considered promising for the application in electrodialysis processes.

## Claims

1. A process for making a composite ion exchange membrane, said composite ion exchange membrane comprising at least one ion exchange polymer which adheres to a porous support, the process comprising the steps of :
- providing a porous support comprising a porous polymer matrix, said porous support having a thickness between 10 and 1000 µm and an median pore size between 10 and 100000 nm,
- preparing a curable ion exchange precursor comprising :
(a) radicalizeable monomer or oligomer comprising a vinyl, acryl or acrylamide functional group
(b) monomer, oligomer or polymer with an ion-exchange moiety
(c) optionally an initiator
- creating a thin layer of curable ion exchange precursor onto at least one side of the porous support layer, and
- adhering said curable ion exchange precursor to said porous support by initiating radical polymerization of the curable ion exchange precursor.

2. Process according to claim 1, wherein the curable ion exchange precursor has a viscosity of at least 3000 mPas.

3. Process according to any of the preceding claims 1-2, wherein the curable ion exchange precursor comprises molecules which have a vinyl, acryl or acrylamide functional group and an ion-exchange moiety.

4. Process according to any of the preceding claims 1-3, wherein the curable ion exchange precursor comprises polymers with an ion-exchange moiety but no vinyl, acryl or acrylamide functional group.

5. Process according to any of the preceding claims 1-4, wherein (a) the radicalizeable monomer or oligomer are miscible with (b) the monomer, oligomer or polymer with an ion-exchange moiety.

6. Process according to any of the preceding claims 1-5, wherein radical polymerization is UV-initiated.

7. Process according to any of the preceding claims 1-6, wherein the ion-exchange moiety comprises functional groups chosen from the list of sulfonic -SO₃⁻ or carboxyl -COO⁻ or their protonated forms.

8. Process according to any of the preceding claims 1-7, wherein the ion-exchange moiety comprises ionic or protonable amino groups, chosen from the list of : -NH₃⁺,-NH₂, -NR₁H₂⁺, -NRH, -NR₁R₂H⁺, -NR₁R₂ or -NR₁R₂R₃⁺.

9. Process according to any of the preceding claims 1-8, comprising the step of:
- blade coating said curable ion exchange precursor onto said porous support.

10. Process according to any of the preceding claims 1-9, wherein said thin layer of curable ion exchange precursor is applied to both sides of a longitudinal porous support.

11. Composite ion exchange membrane obtainable by the process according to any of claims 1-10.

12. Composite ion exchange membrane comprising :
- a porous support having a thickness between 10 and 600 µm and an median pore size between 50 and 1000 nm,
- an ion exchange layer which adheres to said porous support layer, said having a thickness between 10 and 100 µm and said ion exchange layer comprising ion-exchange moieties.

13. Composite ion exchange membrane according to claim 11 or 12, wherein the depth of impregnation of the ion exchange coating into the porous substrate is less than 30% of the thickness of the coating, preferably less than 15% of the thickness of the coating, more preferably less than 5% of the thickness of the coating.

14. Composite ion exchange membrane according to claims 11-13, wherein the ion exchange layer consists of an interpenetrating polymer network (IPN), said interpenetrating polymer network comprising at least one functionalized polymer interlaced with a fixing polymer matrix, wherein said fixing polymer matrix is crosslinked.

15. Composite ion exchange membrane according to claim 14, wherein at least one of said functionalized polymer is chosen from the list of : sulfonated poly(ether sulfone) (S-PES), sulfonated poly(ether ether ketone) (S-PEEK), sulfonated polystyrene, poly(dimethyldiallylammoniumchloride)( PolyDADMAC), Polyvinylpyrrolidone (PVP), Polyvinylimidazole (PVI), polyethylenimine (PEI) and salts thereof.
